# EUROPÄISCHE PATENTSCHRIFT

(11) **EP 3 292 016 B1**
(45) Veröffentlichungstag und Bekanntmachung des Hinweises auf die Patenterteilung: **21.10.2020**
(21) Anmeldenummer: 16715509.2
(22) Anmeldetag: 07.04.2016
(51) Int. Cl.: B60L 1/00, H02J 50/10, B60R 16/03

(54) **AKKUINDUKTIVLADEVORRICHTUNG**
BATTERY INDUCTIVE CHARGING DEVICE
DISPOSITIF DE CHARGE À INDUCTION DE BATTERIE

(30) Priorität: 05.05.2015 DE 102015208254
(43) Veröffentlichungstag der Anmeldung: 14.03.2018
(73) Patentinhaber: Robert Bosch GmbH, 70442 Stuttgart (DE)
(72) Erfinder: MARGARITIS, Georgios, 71701 Schwieberdingen (DE); MACK, Juergen, 73035 Goeppingen (DE)
(86) Internationale Anmeldenummer: PCT/EP2016/057634
(87) Internationale Veröffentlichungsnummer: WO 2016/177530

(56) Entgegenhaltungen:
- EP-A2- 2 555 945
- DE-A1-102012 206 727
- DE-A1-102012 206 728
- ToolBoxBuzz: "Bosch Power Ready Wireless Charging System", YouTube, 6. Oktober 2014 (2014-10-06), Seiten 1-1, XP054976613, Gefunden im Internet: URL:https://www.youtube.com/watch?v=FGAv-Q HCC2w [gefunden am 2016-06-21]

## Beschreibung

### Stand der Technik

Aus der DE 10 2012 206 728 A1 und der DE 10 2012 206 727 A1 sind bereits Akkuinduktivladevorrichtungen mit einem Gleichspannungswandler und mit einer Induktivladeeinheit nach dem Oberbegriff des Anspruchs 1 bekannt, wobei die Induktivladeeinheit zu einer Energieversorgung durch den Gleichspannungswandler vorgesehen ist. Aus der DE 10 2012 206 728 A1 ist ferner bekannt, dass die dortige Induktivladeeinheit eine Funktionseinheit umfasst, die eine Frequenz einer anliegenden Versorgungsspannung des Fahrzeugs zur Unterscheidung zwischen einer Gleichspannung und einer Wechselspannung automatisch erkennen kann.

### Offenbarung der Erfindung

Es wird eine Akkuinduktivladevorrichtung mit einer Induktivladeeinheit zum Laden einer Handwerkzeugmaschine, eines Hausgeräts, eines Handwerkzeugmaschinenakkupacks oder eines Hausgeräteakkupacks nach dem Oberbegriff des Anspruchs 1 vorgeschlagen, wobei die Akkuinduktivladevorrichting eine Halteeinheit aufweist, die die Handwerkzeugmaschine, das Hausgerät, den Handwerkzeugmaschinenakkupack oder den Hausgeräteakkupack zu einem Ladevorgang relativ zu der Induktivladeeinheit positioniert. Die Halteeinheit weist zumindest eine Übersetzungseinheit auf, die dazu vorgesehen ist, eine Schwerkraft in eine im Wesentlichen senkrecht zu der Schwerkraft wirkende Positionierkraft zu übersetzen. Auf diese Weise kann während der Fahrt eines Fahrzeugs ein sicheres und unterbrechungsfreies induktives Laden mit einfachen Mitteln für den Bediener ermöglicht werden. Zudem können die Handwerkzeugmaschine, das Hausgerät, der Handwerkzeugmaschinenakkupack oder der Hausgeräteakkupack besonders einfach und/oder schnell in eine Ladeposition gebracht werden. Unter "im Wesentlichen senkrecht" soll in diesem Zusammenhang insbesondere verstanden werden, dass die Richtungen der Schwerkraft und der Positionierkraft einen Winkel in einem Bereich von 70 Grad bis 110 Grad, vorzugsweise in einem Bereich von 80 Grad bis 100 Grad und besonders bevorzugt in einem Bereich von 85 Grad bis 95 Grad einschließen. Unter einer "Positionierkraft" soll in diesem Zusammenhang insbesondere eine Kraft verstanden werden, die auf die Induktivladeeinheit, den Akkupack, die Handwerkzeugmaschine oder das Hausgerät in Richtung einer Ladeposition wirkt. Unter einer "Richtung einer Schwerkraft" soll in diesem Zusammenhang insbesondere eine Richtung verstanden werden, in weiche die Schwerkraft auf in dem Fahrzeug angeordnete Elemente wirkt, bei einer für das Fahrzeug vorgesehenen Ausrichtung relativ zu einem Schwerefeld, in der ein Boden des Fahrzeugs zumindest im Wesentlichen parallel zu einer Erdoberfläche ausgerichtet ist.

Dadurch, dass die erfindungsgemäße Akkuinduktivladevorrichtung während der Fahrt des Fahrzeugs nutzbar ist, kann die Fahrtzeit vorteilhaft genutzt werden. Unter einem "Fahrzeug" soll in diesem Zusammenhang insbesondere ein Kraftfahrzeug, vorzugsweise ein Straßenkraftfahrzeug, verstanden werden. Unter einer "Induktivladeeinheit" soll in diesem Zusammenhang eine Einheit zur Aufladung eines Akkupacks oder einer Handwerkzeugmaschine verstanden werden, die dazu vorgesehen ist, in zumindest einem Ladezustand einen Ladestrom durch elektromagnetische Induktion weiterzugeben. Vorzugsweise umfasst die Induktionseinheit eine als Primärspule ausgebildete Induktionsspule, die dazu vorgesehen ist, in zumindest einem Betriebszustand durch eine anliegende elektrische Energie, insbesondere durch eine Wechselspannung, ein Magnetfeld zu erzeugen, das in einer Induktionsspule des Akkupacks oder der Handwerkzeugmaschine einen elektrischen Wechselstrom erzeugt. Insbesondere ist die Induktionsspule dazu vorgesehen, ein elektromagnetisches Wechselfeld in einen elektrischen Wechselstrom umzuwandeln und/oder umgekehrt. Bevorzugt weist das Wechselfeld eine Frequenz von 10 - 500 kHz, besonders bevorzugt von 100 -120 kHz, auf. Bevorzugt umfasst die Induktivladeeinheit zumindest ein Kernelement zu einer Erhöhung einer Induktivität der zumindest einen Induktionsspule. Unter einem "Akkupack" soll in diesem Zusammenhang insbesondere eine Energiespeichereinheit, insbesondere eine als Induktivladeakkupack ausgebildete Energiespeichereinheit, verstanden werden, die eine als eine Sekundärspule ausgebildete Induktionsspule aufweist. Vorzugsweise ist der Akkupack als ein Handwerkzeugmaschinenakkupack oder als ein Hausgeräteakkupack ausgebildet und dazu vorgesehen, eine Maschine, insbesondere eine Handwerkzeugmaschine und/oder ein Hausgerät mit elektrischer Energie zu versorgen. Vorzugsweise ist der Akkupack dazu vorgesehen, zumindest eine elektrische Antriebseinheit der Maschine mit elektrischer Energie zu versorgen. Bevorzugt ist der Akkupack zum temporären Speichern elektrischer Energie vorgesehen. Unter einer "Handwerkzeugmaschine" soll in diesem Zusammenhang insbesondere eine Bohrmaschine, ein Bohr- und/oder Schlaghammer, eine Säge, ein Hobel, ein Schrauber, eine Fräse, ein Schleifer, ein Winkeischleifer, ein Gartengerät, insbesondere ein Mäher, ein Sauger und/oder ein Multifunktionswerkzeug verstanden werden. Unter einem "Hausgerät" soll in diesem Zusammenhang insbesondere ein Gerät verstanden werden, das dazu vorgesehen ist, in einem Haushalt eingesetzt zu werden, und insbesondere eine Hausarbeit zu verrichten und/oder zu unterstützen und/oder das zu einer Körperpflege, Unterhaltung, sportlichen Betätigung und/oder Informationsübermittlung vorgesehen ist. Unter einem "Gleichspannungswandler" soll in diesem Zusammenhang insbesondere eine Einheit verstanden werden, die dazu vorgesehen ist, einen eine Gleichspannung aufweisenden Eingangsstrom in einen eine Gleichspannung aufweisenden Ausgangsstrom umzuwandeln. Vorzugsweise weist der Gleichspannungswandler einen Energiezwischenspeicher und eine Schaltelektronik auf. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass der Gleichspannungswandler dazu vorgesehen ist, eine Spannung eines Energiespeichers in eine höhere Spannung zur Versorgung der Induktivladeeinheit zu wandeln. Dadurch kann eine vorhandene Induktivladeeinheit vorteilhaft in einem Fahrzeug eingesetzt werden. Es können geringe Entwicklungskosten und/oder Produktionskosten erreicht werden. Es kann eine vorteilhafte Nutzung des Energiespeichers erreicht werden. Unter einem "Energiespeicher" soll in diesem Zusammenhang insbesondere ein Niederspannungsenergiespeicher, beispielsweise ein Bleiakkumulator, verstanden werden. Vorzugsweise ist der Energiespeicher zu einer Energieversorgung eines Bordnetzes des Fahrzeugs vorgesehen. Vorzugsweise weist der Energiespeicher eine Ausgangsspannung zwischen einschließlich 12 V und einschließlich 24 V auf. Bevorzugt ist der Gleichspannungswandler für eine Eingangsspannung kleiner gleich 30 V, bevorzugt kleiner gleich 24 V und besonders bevorzugt kleiner gleich 12 V vorgesehen. Bevorzugt weist der Gleichspannungswandler zumindest einen Stromausgang mit einer Ausgangsspannung von zumindest 230 V, bevorzugt von zumindest 250 V und besonders bevorzugt von zumindest 300 V und ganz besonders bevorzugt von zumindest 325 V auf. Es ist denkbar, dass der Gleichspannungswandler eine Mehrzahl von Stromausgängen aufweist. Es ist denkbar, dass die Stromausgänge des Gleichspannungswandlers eine zumindest im Wesentlichen gleiche Ausgangsspannung oder unterschiedliche Ausgangsspannungen aufweisen. Vorzugsweise weisen der Gleichspannungswandler und die Induktivladeeinheit getrennt voneinander ausgebildete Gehäuse auf. Alternativ kann die Akkuinduktivladevorrichtung zumindest eine Einheit mit einem Gehäuse umfassen, in dem der zumindest eine Gleichspannungswandler und die zumindest eine Induktivladeeinheit angeordnet sind. Vorzugsweise umfasst die Akkuinduktivladevorrichtung zumindest eine Einheit mit einem Gehäuse, in dem der zumindest eine Gleichspannungswandler und eine Mehrzahl von Induktivladeeinheiten, insbesondere zwei Induktivladeeinheiten, angeordnet sind.

In vorteilhafter Weise ist die Induktivladeeinheit dazu vorgesehen, wahlweise mit Gleichstrom oder Wechselstrom versorgt zu werden. Dadurch kann eine besonders vielseitig einsetzbare Akkuinduktivladevorrichtung bereitgestellt werden. Kosten für Entwicklung und/oder Produktion können weiter vermindert werden. Ein Benutzerkomfort kann weiter gesteigert werden. Vorzugsweise ist die Induktivladeeinheit zu einer Versorgung mit einer Netzspannung vorgesehen, die eine Effektivspannung von etwa 230 V und eine Frequenz von etwa 50 Hz aufweist.

In einer vorteilhaften Ausgestaltung umfasst die Akkuinduktivladevorrichtung eine Mehrzahl von Induktivladeeinheiten, die zu einer Energieversorgung durch zumindest einen Gleichspannungswandler vorgesehen sind. Dadurch kann eine Mehrzahl von Akkupacks gleichzeitig geladen werden oder eine Mehrzahl von Akkupacks kann gleichzeitig in einer Ladeposition angeordnet werden unabhängig von einer Ladereihenfolge. Dadurch kann eine Effizienz der Akkuinduktivladevorrichtung weiter gesteigert werden. Eine Teilezahl und/oder eine Zahl von elektrischen Verbindungsleitungen kann klein gehalten werden. Es kann eine besonders kostengünstige Akkuinduktivladevorrichtung bereitgestellt werden. Vorzugsweise weist die Akkuinduktiviadevorrichtung eine Mehrzahl von elektrischen Verbindungsleitungen auf, die in einem montierten Zustand, den Gleichspannungswandler mit jeweils einer Induktivladeeinheit verbinden. In vorteilhafter Weise umfasst die Akkuinduktivladevorrichtung eine Verteilereinheit, die eine Mehrzahl von Anschlüssen aufweist, die zumindest zu einer temporären Verbindung mit jeweils einer Induktivladeeinheit vorgesehen sind. Dadurch kann besonders einfach eine Mehrzahl von Akkupacks geladen werden. Es können Ersatzakkupacks geladen werden. Es können Akkupacks für Handwerkzeugmaschinen und/oder Hausgeräte für unterschiedliche Verwendungen geladen werden. Ferner kann ein kurzes elektrisches Verbindungskabel zwischen dem Energiespeicher und dem Gleichspannungswandler erreicht werden. Es kann metallisches Leitermaterial, insbesondere Kupfer eingespart werden. Eine Verlustleistung kann begrenzt werden. Die Verteilereinheit ist bezogen auf einen Energiefluss zwischen dem Gleichspannungswandler und der Mehrzahl von Induktivladeeinheiten angeordnet.

In einer vorteilhaften Ausgestaltung weist eine Akkuinduktivladevorrichtung eine Steckverbindung auf, die dazu vorgesehen ist, die Induktivladeeinheit, wahlweise mit der Verteilereinheit oder einem Netzanschluss zu verbinden. Dadurch kann die Akkuinduktivladeeinheit besonders einfach mit einem Netzanschluss betrieben werden. Unter "verbinden" soll in diesem Zusammenhang insbesondere elektrisch verbinden, insbesondere zu einer Energieübertragung verbinden, verstanden werden. Unter einer "Steckverbindung" soll in diesem Zusammenhang insbesondere eine werkzeuglos lösbare Verbindung verstanden werden. Es ist denkbar, dass die Steckverbindung zumindest einen Adapter aufweist, der dazu vorgesehen ist, die Induktiveinheit mit der Verteilereinheit oder dem Netzanschluss zu verbinden.

In vorteilhafter Weist umfasst die Akkuinduktivladeeinheit eine Ladebucht, welche die Induktivladeeinheit umfasst und zur Aufnahme eines Handwerkzeugkoffers vorgesehen ist. Dadurch kann eine Akkuinduktivladevorrichtung für einen großen Einsatzbereich bereitgestellt werden. Eine Benutzung der Akkuinduktivladevorrichtung kann weiter vereinfacht werden. Unter einer "Ladebucht" soll in diesem Zusammenhang insbesondere eine Einheit verstanden werden, die dazu vorgesehen ist, den Handwerkzeugkoffer zu einem Ladevorgang, einer Aufbewahrung und/oder zu einem Transport, vorzugsweise in einem Gebäude oder in einem Fahrzeug, zu lagern. Vorzugsweise sind der Handwerkzeugkoffer und die Ladebucht fest, bevorzugt werkzeuglos, miteinander verbindbar ausgebildet. Bevorzugt sind der Handwerkzeugkoffer und die Ladebucht zerstörungsfrei, bevorzugt werkzeuglos voneinander trennbar ausgebildet. Vorzugsweise wird der Handwerkzeugkoffer aufgrund einer Schwerkraft und/oder mittels einer Rastverbindung und/oder mittels einer Spannvorrichtung in der Ladebucht gehalten. Die Ladebucht ist vorzugsweise zu einer Montage in einem Lagersystem, beispielsweise in einem Regalsystem und/oder in einem Racksystem vorgesehen. Vorzugsweise weist die Ladebucht eine Mehrzahl von Induktivladeeinheiten, bevorzugt zwei Induktivladeeinheiten, auf. Unter einem "Handwerkzeugkoffer" soll in diesem Zusammenhang insbesondere ein von Hand tragbarer Koffer verstanden werden, der dazu vorgesehen ist, einen in einem Kofferinnenraum gelagerten Transportgegenstand, insbesondere einen Akkupack, eine Handwerkzeugmaschine und/oder ein Hausgerät, oder eine Mehrzahl von Transportgegenständen vor Staub, Feuchtigkeit, mechanischer Einwirkung und/oder weiteren Umwelteinflüssen zu schützen. Vorzugsweise ist der Handwerkzeugkoffer dazu vorgesehen, den Transportgegenstand zu einer drahtlosen Energieübertragung zu lagern. Bevorzugt ist der Handwerkzeugkoffer dazu vorgesehen, in die Ladebucht eingesetzt zu werden. Die Ladebucht ist bevorzugt dazu vorgesehen, Energie für eine drahtlose Energieübertragung bereitzustellen.

Die erfindungsgemäße Akkuinduktivvorrichtung soll hierbei nicht auf die oben beschriebene Anwendung und Ausführungsform beschränkt sein. Insbesondere kann die erfindungsgemäße Akkuinduktivvorrichtung zu einer Erfüllung einer hierin beschriebenen Funktionsweise eine von einer hierin genannten Anzahl von einzelnen Elementen, Bauteilen und Einheiten abweichende Anzahl aufweisen.

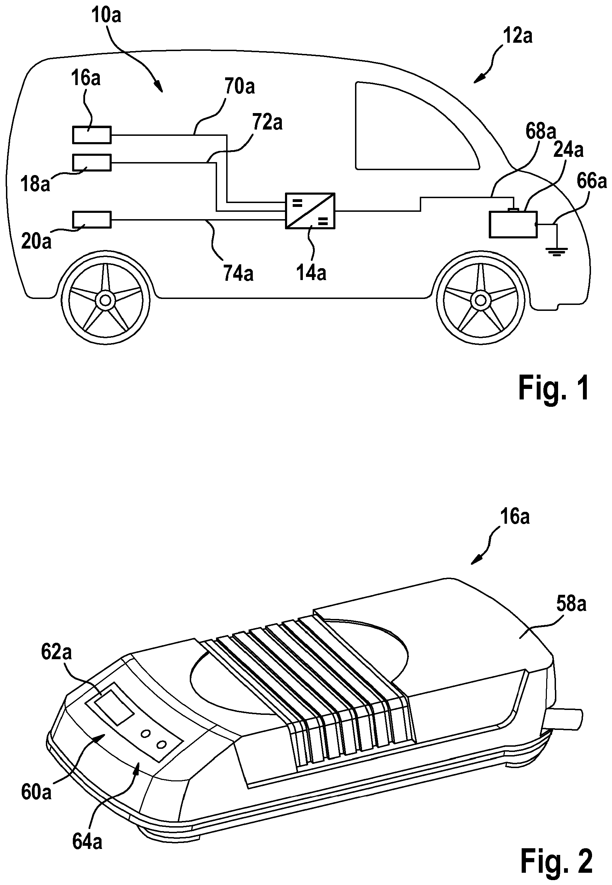

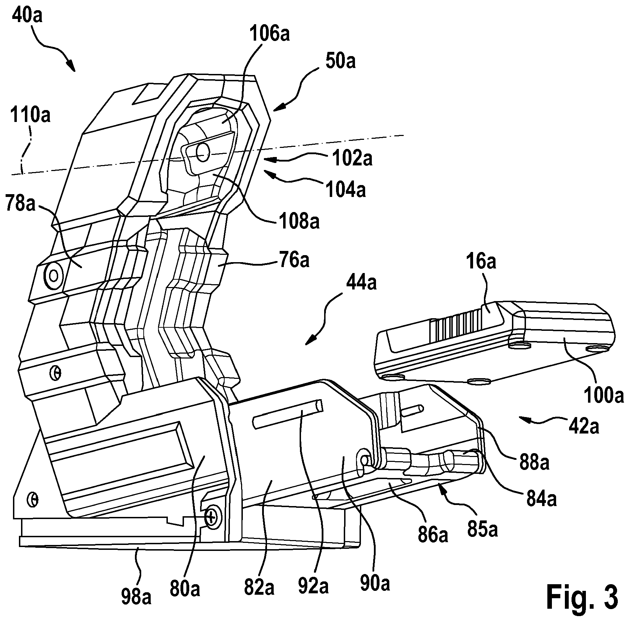

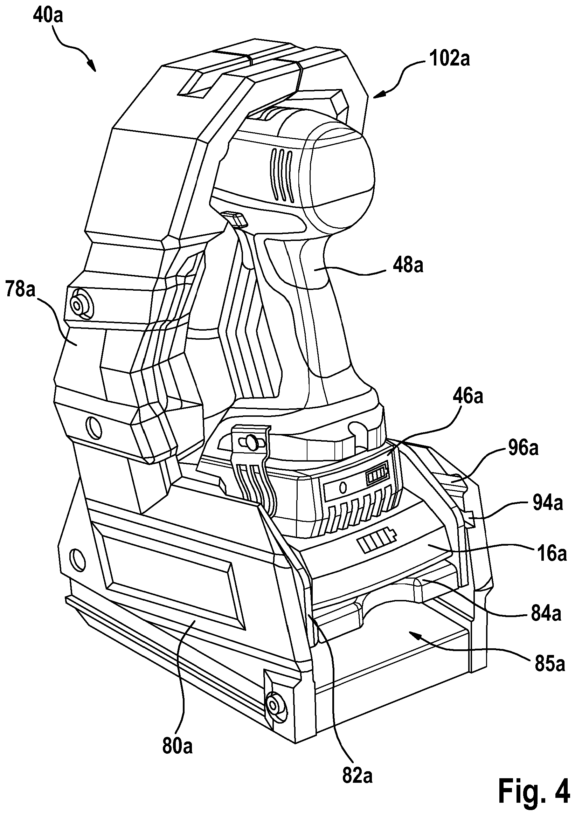

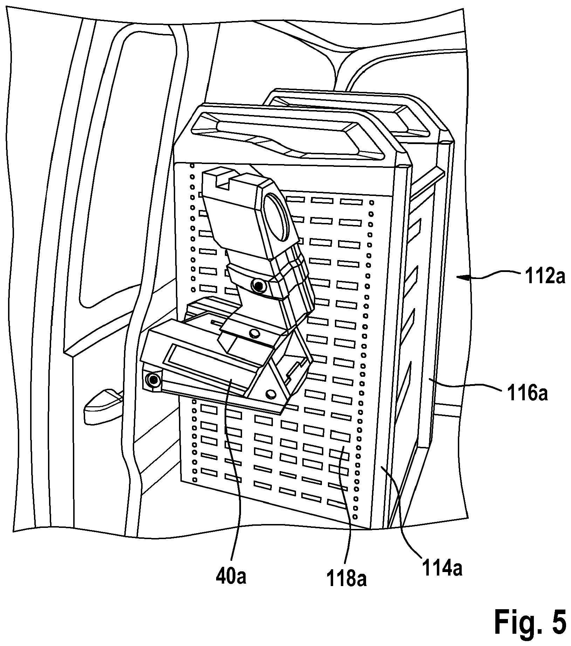

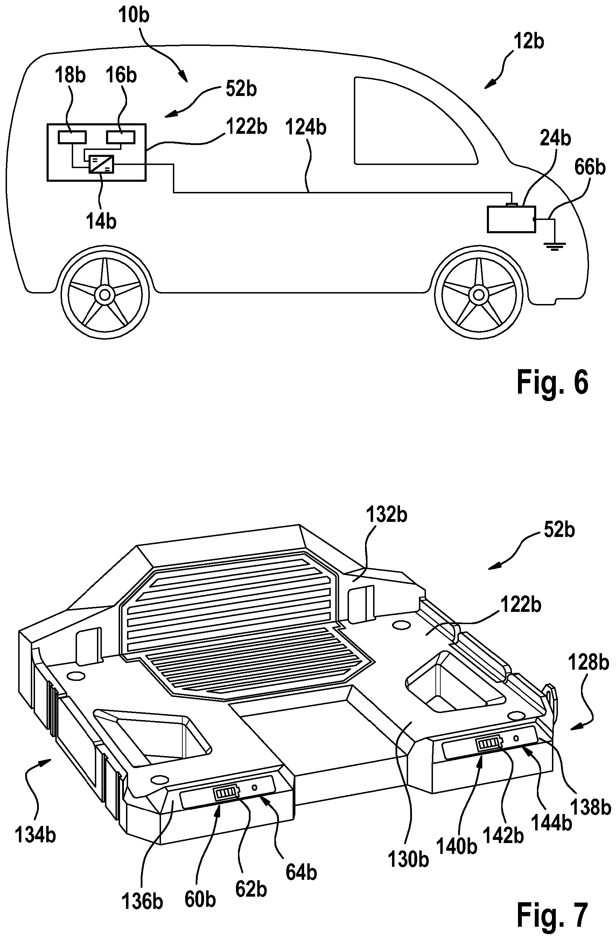

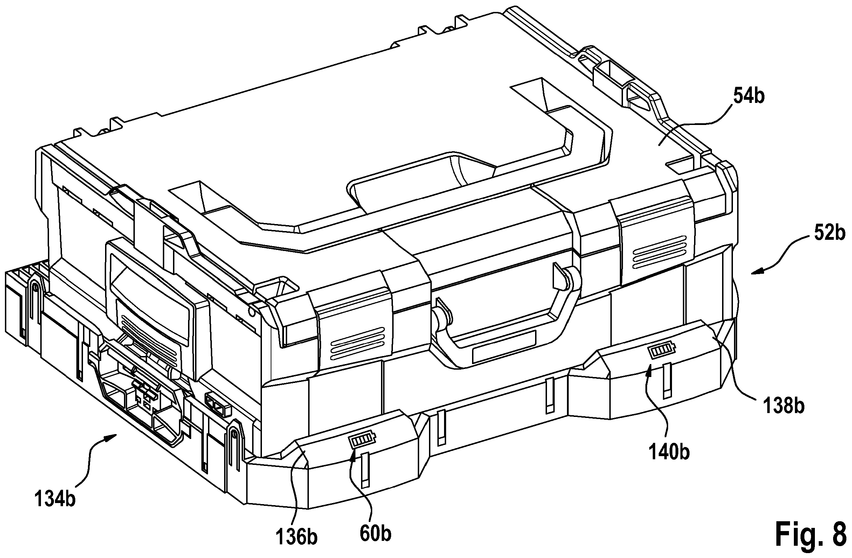

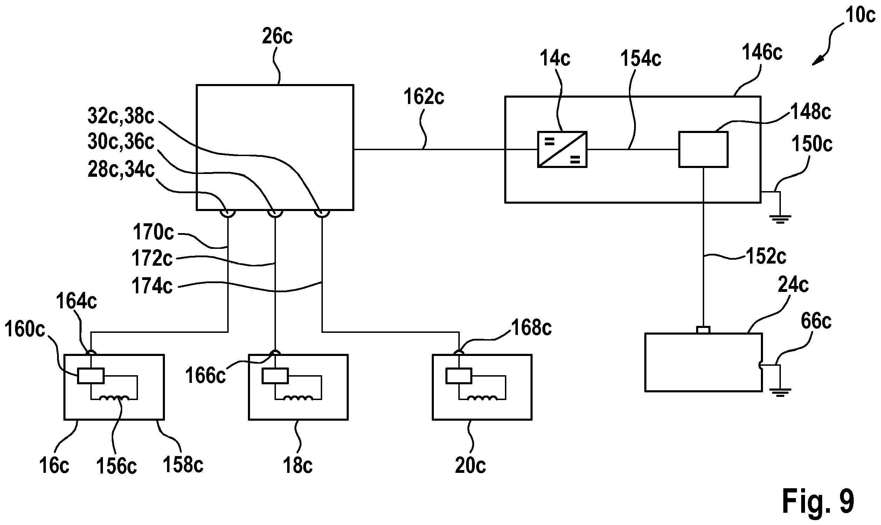

## Patentansprüche

1. Akkuinduktivladevorrichtung zum Laden einer Handwerkzeugmaschine, eines Hausgeräts (48a), eines Handwerkzeugmaschinenakkupacks oder eines Hausgeräteakkupacks (46a) während der Fahrt eines Fahrzeugs (12a; 12b), mit einem Gleichspannungswandler (14a; 14b; 14c) und mit einer Induktivladeeinheit (16a, 18a, 20a; 16b, 18b; 16c, 18c, 20c), die zu einer Energieversorgung durch den Gleichspannungswandier (14a; 14b; 14c) vorgesehen ist, wobei die Induktivladeeinheit (16c, 18c, 20c) eine Funktionseinheit umfasst, die dazu vorgesehen ist, eine Frequenz einer anliegenden Versorgungsspannung des Fahrzeugs (12a; 12b) zur Unterscheidung zwischen einer Gleichspannung und einer Wechselspannung automatisch zu erkennen, **dadurch gekennzeichnet dass** eine Halteeinheit (40a) die Handwerkzeugmaschine, das Hausgerät (48a), den Handwerkzeugmaschinenakkupack oder den Hausgeräteakkupack (46a) zu einem Ladevorgang relativ zu der Induktivladeeinheit (16a, 18a, 20a) positioniert, wobei die Halteeinheit (40a) zumindest eine Übersetzungseinheit (50a) aufweist, die dazu vorgesehen ist, eine Schwerkraft in eine im Wesentlichen senkrecht zu der Schwerkraft wirkende Positionierkraft zu übersetzen.

2. Akkuinduktivladevorrichtung nach Anspruch 1, **dadurch gekennzeichnet, dass** der Gleichspannungswandler (14a; 14b; 14c) dazu vorgesehen ist, eine Spannung eines Energiespeichers (24a; 24b; 24c) in eine höhere Spannung zur Versorgung der Induktivladeeinheit (16a, 18a, 20a; 16b, 18b; 16c, 18c, 20c) zu wandeln.

3. Akkuinduktivladevorrichtung nach einem der vorhergehenden Ansprüche, **dadurch gekennzeichnet, dass** die Induktivladeeinheit (16c, 18c, 20c), dazu vorgesehen ist, wahlweise mit Gleichstrom oder Wechselstrom versorgt zu werden.

4. Akkuinduktivladevorrichtung nach einem der vorhergehenden Ansprüche, **gekennzeichnet durch** eine Mehrzahl von Induktivladeeinheiten (16a, 18a, 20a; 16b, 18b; 16c, 18c, 20c), die zu einer Energieversorgung durch den Gleichspannungswandler (14a; 14b; 14c) vorgesehen sind.

5. Akkuinduktivladevorrichtung nach Anspruch 4, **gekennzeichnet durch** eine Verteilereinheit (26c), die eine Mehrzahl von Anschlüssen (28c, 30c, 32c) aufweist, die zumindest zu einer temporären Verbindung mit jeweils einer Induktivladeeinheit (16c, 18c, 20c) vorgesehen sind.

6. Akkuinduktivladevorrichtung nach Anspruch 5, **gekennzeichnet durch** eine Steckverbindung (34c, 36c, 38c), die dazu vorgesehen ist, die Induktivladeeinheiten (16c, 18c, 20c), wahlweise mit der Verteilereinheit (26c) oder einem Netzanschluss zu verbinden.

7. Akkuinduktivladevorrichtung nach einem der vorhergehenden Ansprüche, **gekennzeichnet durch** eine Ladebucht (52b), welche die Induktivladeeinheit (16b, 18b) umfasst und zur Aufnahme eines Handwerkzeugkoffers (54b) vorgesehen ist.

## Claims

1. Rechargeable battery inductive charging apparatus for charging a handheld power tool, a household device (48a), a handheld power tool rechargeable battery pack or a household device rechargeable battery pack (46a) during the journey of a vehicle (12a; 12b), having a DC/DC converter (14a; 14b; 14c) and having an inductive charging unit (16a, 18a, 20a; 16b, 18b; 16c, 18c, 20c) which is intended to be supplied with energy by the DC/DC converter (14a; 14b; 14c), wherein the inductive charging unit (16c, 18c, 20c) comprises a functional unit which is intended to automatically detect a frequency of an applied supply voltage of the vehicle (12a; 12b) in order to distinguish between a DC voltage and an AC voltage, **characterized in that** a holding unit (40a) positions the handheld power tool, the household device (48a), the handheld power tool rechargeable battery pack or the household device rechargeable battery pack (46a) relative to the inductive charging unit (16a, 18a, 20a) for a charging operation, wherein the holding unit (40a) has at least one conversion unit (50a) which is intended to convert a gravitational force into a positioning force acting substantially perpendicular to the gravitational force.

2. Rechargeable battery inductive charging apparatus according to Claim 1, **characterized in that** the DC/DC converter (14a; 14b; 14c) is intended to convert a voltage of an energy store (24a; 24b; 24c) into a higher voltage for supplying the inductive charging unit (16a, 18a, 20a; 16b, 18b; 16c, 18c, 20c) .

3. Rechargeable battery inductive charging apparatus according to one of the preceding claims, **characterized in that** the inductive charging unit (16c, 18c, 20c) is intended to be supplied either with direct current or with alternating current.

4. Rechargeable battery inductive charging apparatus according to one of the preceding claims, **characterized by** a plurality of inductive charging units (16a, 18a, 20a; 16b, 18b; 16c, 18c, 20c) which are intended to be supplied with energy by the DC/DC converter (14a; 14b; 14c).

5. Rechargeable battery inductive charging apparatus according to Claim 4, **characterized by** a distribution unit (26c) having a plurality of connections (28c, 30c, 32c) which are intended to be at least temporarily connected to an inductive charging unit (16c, 18c, 20c) in each case.

6. Rechargeable battery inductive charging apparatus according to Claim 5, **characterized by** a plug-in connection (34c, 36c, 38c) which is intended to connect the inductive charging units (16c, 18c, 20c) either to the distribution unit (26c) or to a mains connection.

7. Rechargeable battery inductive charging apparatus according to one of the preceding claims, **characterized by** a charging cradle (52b) which comprises the inductive charging unit (16b, 18b) and is intended to receive a handheld power tool case (54b) .

## Revendications

1. Dispositif de charge à induction de batterie permettant de charger un outil à main motorisé, un appareil ménager (48a), un bloc-batterie pour outil à main motorisé ou un bloc-batterie pour appareil ménager (46a) pendant la marche d'un véhicule (12a ; 12b), comprenant un convertisseur continu-continu (14a ; 14b ; 14c) et une unité de charge à induction (16a, 18a, 20a ; 16b, 18b ; 16c, 18c, 20c) qui est prévue pour être alimentée en énergie par le convertisseur continu-continu (14a ; 14b ; 14c), l'unité de charge à induction (16c, 18c, 20c) comprenant une unité fonctionnelle qui est prévue pour reconnaître automatiquement une fréquence d'une tension d'alimentation appliquée du véhicule (12a ; 12b) pour distinguer entre une tension continue et une tension alternative, **caractérisé en ce qu'**une unité de maintien (40a) positionne l'outil à main motorisé, l'appareil ménager (48a), le bloc-batterie pour outil à main motorisé ou le bloc-batterie pour appareil ménager (46a) pour une opération de charge par rapport à l'unité de charge à induction (16a, 18a, 20a), l'unité de maintien (40a) présentant au moins une unité de conversion (50a) qui est prévue pour convertir une force de gravité en une force de positionnement agissant de manière substantiellement perpendiculaire à la force de gravité.

2. Dispositif de charge à induction de batterie selon la revendication 1, **caractérisé en ce que** le convertisseur continu-continu (14a ; 14b ; 14c) est prévu pour convertir une tension d'un accumulateur d'énergie (24a ; 24b ; 24c) en une tension supérieure pour alimenter l'unité de charge à induction (16a, 18a, 20a ; 16b, 18b ; 16c, 18c, 20c).

3. Dispositif de charge à induction de batterie selon l'une quelconque des revendications précédentes, **caractérisé en ce que** l'unité de charge à induction (16c, 18c, 20c) est prévue pour être alimentée au choix en courant continu ou en courant alternatif.

4. Dispositif de charge à induction de batterie selon l'une quelconque des revendications précédentes, **caractérisé par** une pluralité d'unités de charge à induction (16a, 18a, 20a ; 16b, 18b ; 18c, 20c) qui sont prévues pour être alimentées en énergie par le convertisseur continu-continu (14a ; 14b ; 14c).

5. Dispositif de charge à induction de batterie selon la revendication 4, **caractérisé par** une unité de distribution (26c) qui présente une pluralité de connexions (28c, 30c, 32c) qui sont prévues pour une connexion au moins temporaire à une unité de charge à induction (16c, 18c, 20c) respectivement.

6. Dispositif de charge à induction de batterie selon la revendication 5, **caractérisé par** une connexion enfichable (34c, 36c, 38c) qui est prévue pour relier les unités de charge à induction (16c, 18c, 20c) au choix à l'unité de distribution (26c) ou à une connexion de réseau.

7. Dispositif de charge à induction de batterie selon l'une quelconque des revendications précédentes, **caractérisé par** un logement de chargeur (52b) qui comprend l'unité de charge à induction (16b, 18b) et est prévu pour recevoir une boîte à outil à main (54b).
